# EUROPEAN PATENT SPECIFICATION

(11) **EP 3 752 761 B1**
(45) Date of publication and mention of the grant of the patent: **05.01.2022**
(21) Application number: 19704305.2
(22) Date of filing: 07.02.2019
(51) Int. Cl.: F16L 27/08, F16L 39/04, F16L 39/06, F16H 1/28

(54) **HIGH SPEED ROTARY UNION**
HOCHGESCHWINDIGKEITSDREHVERBINDUNG
RACCORD ROTATIF À GRANDE VITESSE

(30) Priority: 14.02.2018 IT 201800002682
(43) Date of publication of application: 23.12.2020
(73) Proprietor: Baldoni, Viscardo, 06121 Perugia (IT)
(72) Inventor: Baldoni, Viscardo, 06121 Perugia (IT)
(74) Representative: Cutropia, Gianluigi
(86) International application number: PCT/EP2019/053057
(87) International publication number: WO 2019/158435

(56) References cited:
- DE-A1- 10 332 010
- US-A- 2 350 492
- US-A- 3 853 328
- US-A1- 2008 113 537

## Description

The present invention relates to a rotary union used for transferring liquid or gaseous fluids.

The provision of a rotary union along a pressurized pipe guarantees the continuous transportation of the fluid between pipe portions in mutual movement.

Rotary unions are typically used for transferring one or more fluids, by means of one or more independent pipes, from a fixed part of a machine to one or more rotary parts of the same machine, usually shafts and/or coaxial shafts.

With a certain type of fluid to be transported, with a given pressure and temperature value, the rotary unions of the prior art differ in terms of size, flow rate, number of independent fluidic lines, assembly of the fixed part and of the rotary part to the machine, rubbing speed of the elastomeric seals, etc.

From a structural viewpoint, the rotary unions of the prior art are normally composed of a rotary part that is angularly, axially and radially coupled to the rotary part of the machine, and of a stationary part that is angularly integral with the frame of the machine, but radially and axially integral with the rotary part.

The stationary part of the union is provided with a given number of fluid inlets-outlets, each of them being in communication with a respective annular distribution channel in the body of the union, flanked by seals to prevent fluid leakage from the channel.

The rotary part of the union is provided with the same number of fluid inlets-outlets, substantially consisting in holes and flow channels obtained in the rotary part of the rotary union that can be connected to the service points of the shaft.

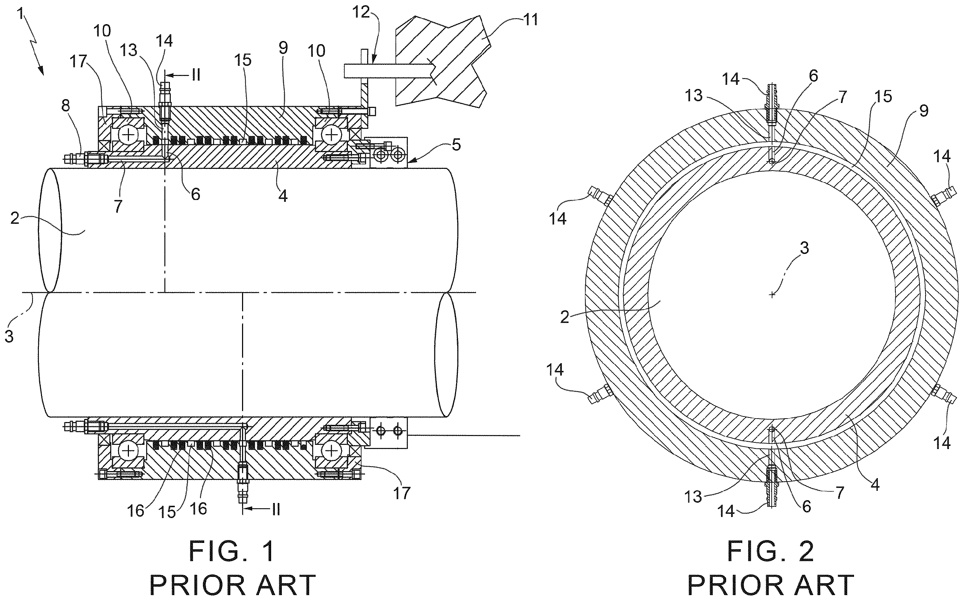

For illustrative purposes, a rotary union with the aforementioned structure is shown in Fig. 1 and 2 appended to this description.

In particular, in Fig. 1, the reference numeral 1 indicates a rotary union with multiple fluidic connections mounted on a shaft 2 that revolves around a longitudinal axis 3.

The rotary union 1 comprises a rotary manifold 4, which is the aforementioned rotary part of the union, and is defined by a metal tube coaxial to the axis 3 and fixed to the shaft 2 by means of a coupling device 5, specifically friction jaws.

The rotary manifold 4 has a given number of fluid passages, each of them comprising a first section defined by a radial hole 6 with an opening obtained on the external lateral surface of the rotary manifold 4, and a second section defined by an axial hole 7 with an opening obtained on an axial end of the rotary manifold 4 and engaged by a connection element 8 suitable for connecting the fluid passage to a delivery pipe (not shown) of a service point.

Moreover, the rotary union 1 comprises a stationary manifold 9, which is the aforementioned fixed part of the rotary union, and is defined by a metal tube coaxial to the axis 3 and supported by the rotary manifold 4 by means of bearings 10 in such a way to be axially stationary relative to the shaft 2 and the rotary manifold 4.

Furthermore, the stationary manifold is coupled with an external frame 11 by means of an anti-rotation mechanism 12 that prevents the stationary manifold 9 from being driven into rotation around the axis 3, during the rotation of the shaft 2, because of the friction between the rotary manifold 4 and the stationary manifold 9.

The stationary manifold 9 is provided with the same number of fluid passages as the rotary manifold 4, said fluid passages being defined by respective radial holes 13, each of them being provided with an opening obtained on the external lateral surface of the stationary manifold 9 and engaged by a connection element 14 suitable for connecting the radial hole 13 to a delivery pipe (not shown) of a fluid feeding circuit.

At the opposite end relative to the opening that is engaged by the connection element 14, each radial hole 13 ends in an annular recess 15 obtained on the internal lateral surface of the stationary manifold 9 in coaxial position to the axis 3 and aligned with a corresponding radial hole 6 of the rotary manifold 4. In view of the above, each fluid passage of the stationary manifold 9 is in fluidic communication with a corresponding fluid passage of the rotary manifold 4 by means of an annular recess 15, regardless of the mutual angular position of the two manifolds.

Each annular recess 15 is flanked by two respective annular recesses obtained on the internal lateral surface of the stationary manifold 9 and housing respective sealing members 16, which are generally made of elastomeric material.

The rotary union 1 is closed at its axial ends by two rings 17, which are disposd in external position relative to the bearings 10, are rigidly connected to corresponding axial ends of the stationary manifold 9 and are frictionally coupled to the external lateral surface of the rotary manifold 4 by means of corresponding annular seals.

According to another embodiment, which is not shown, the rotary manifold 4 of the rotary union 1 is not provided and its function is directly performed by the shaft 2. In such a case, the stationary manifold 9 is mounted on the shaft 2 by means of bearings and the radial holes 6 and the axial holes 7 are directly obtained on the shaft 2.

According to another embodiment, the rotary manifold 4 is not shaped like a tube suitable for being coupled on the shaft 2, but is defined by a cylinder provided at one end with a flange for connection with an axial end of the rotary shaft.

Other rotary unions of the aforementioned type are disclosed, for example, in US 3,853,328 and US 2008/0113537.

DE10332010 discloses a rotary union according to the preamble of claim 1.

According to the current practice, the transfer of pressurized fluids through a rotary union is impaired by feasibility limitations that are considerably affected by the state of the art of the elastomeric seals.

The efficiency of the seal between elastomeric seals and contact surfaces is mainly affected by the following factors:
- type of transported fluid
- pressure and temperature of transported fluid
- relative rubbing speed between elastomeric seals and contact surfaces.

According to the prior art, with the same transported fluid and with the same pressure and temperature value of the transported fluid, the permitted rubbing speed of the elastomeric seals may impair the application on shafts with large diameter and/or high rotational speed.

The purpose of the present invention is to provide a rotary union that, unlike the rotary unions of the prior art, can concretely reduce the rubbing speed of the seals, considerably reducing the aforesaid technological limitation.

The higher performance that can be obtained with the rotary union of the present invention is determined by the constructional structure of the rotary union and does not affect the technological quality of the seals that are used according to the prior art.

In particular, using the same fluid, pressure, temperature and seals, the rotary union of the present invention permits a rotational speed of the shaft that is almost double than the rotational speed permitted with the rotary unions of the prior art, while leaving the rubbing speed of the seals within the limits prescribed by the prior art.

According to the present invention, a rotary union according to the appended claims is disclosed.
Fig. 1 is a longitudinal sectional view of a rotary union according to the prior art.
Fig. 2 is a cross-sectional view of the rotary union according to the prior art of Fig. 1 along the line II-II.
Fig. 3 is a side view of a preferred embodiment of the rotary union according to the present invention.
Fig. 4 is a front view of the rotary union of Fig. 3.
Fig. 5 is a sectional view of Fig. 4 along the line V-V.
Fig. 6 is a sectional view of Fig. 5 along the line VI-VI.
Fig. 7 is a sectional view of Fig. 4 along the line VII-VII.
Fig. 8 is a sectional view of Fig. 7 along the line VIII-VIII.
Fig. 9 is a sectional view of Fig. 4 along the line IX-IX.
Fig. 10 is a sectional view of Fig. 9 along the line X-X.
Fig. 11 is a diagrammatic view of the rotary union according to the present invention, which shows some of the physical quantities involved in its operation, and the main mathematical relations between said quantities.

The present invention is described in detail with reference to the appended Figures in order for an expert of the art to make and use it. Numerous modifications to the embodiments described herein will be immediately evident to the experts of the field and the general precepts described herein can be applied to other embodiments and applications without leaving the protection scope of the invention, as defined by the appended claims.Therefore, the present invention must not be considered to be limited to the embodiments described and shown herein.

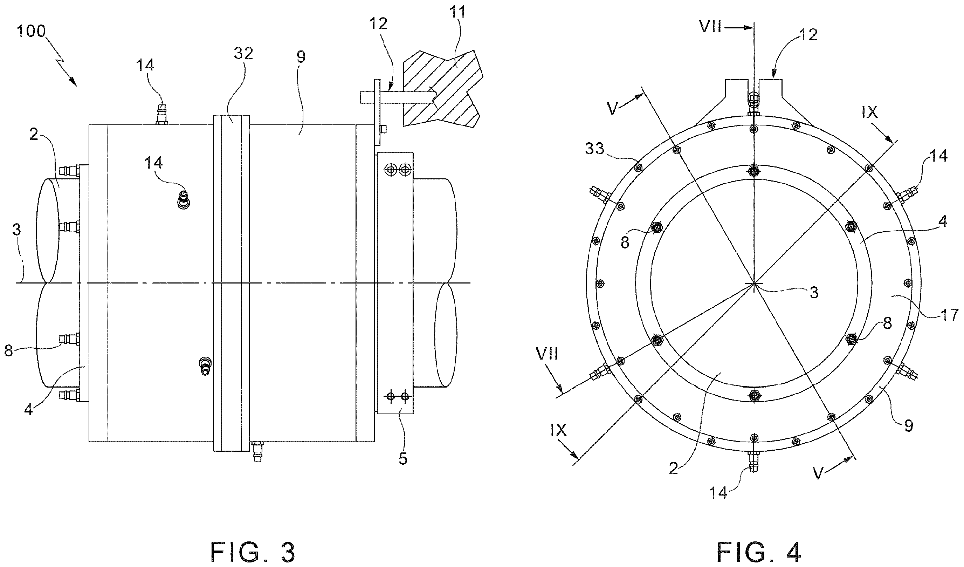

In Figs. 3 to 11, the reference numeral 100 is used to indicate a rotary union according to the present invention. For clarity purposes, whenever possible, parts of the rotary union 100 that are identical or correspond to parts of the rotary union 1 of the prior art described with reference to Figs. 1 and 2 will be indicated with the same reference numerals used for the rotary union 1.

With reference to Figs. 3, 4, 5, 7 and 8, exactly like the aforementioned example, the rotary union 100 comprises a rotary manifold 4 defined by a tube coaxial to the axis 3 and coupled to the shaft 2 by means of a coupling device 5, specifically friction jaws.

The rotary manifold 4 is provided with a given number of fluid passages, each of them comprising a radial hole 6 with an opening on the external lateral surface of the rotary manifold 4, and an axial hole 7 in fluidic communication with the radial hole 6 and provided with an opening disposed on an axial end of the rotary manifold 4 and provided with a connection element 8 for connection to a delivery pipe (not shown) of a service point.

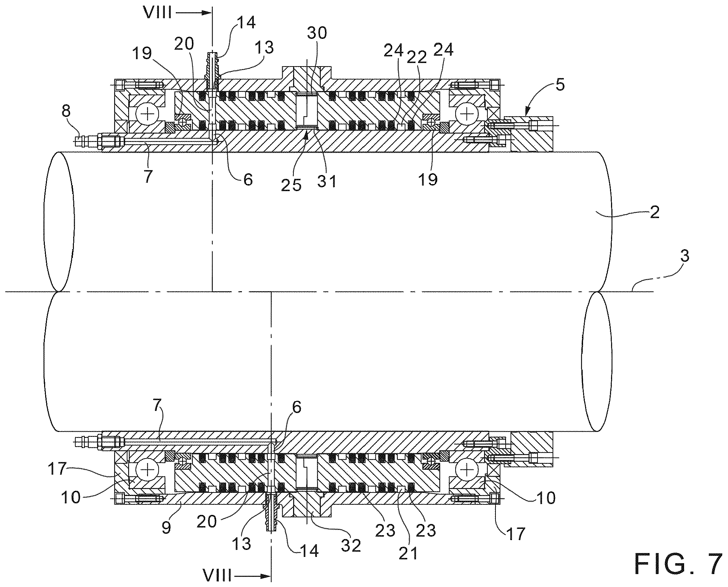

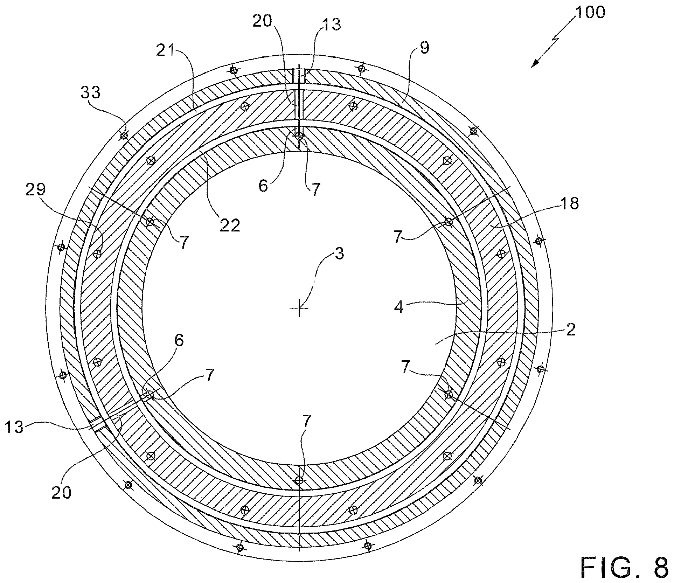

Preferably, as shown in Figs. 7 and 8, the passages for the fluid of the rotary manifold 4 are angularly spaced in a uniform way around the axis 3.

Moreover, exactly like in the aforementioned example, the rotary union 100 comprises a stationary manifold 9 defined by a tube coaxial to the axis 3, angularly fixed with respect to the shaft 2 and supported by the rotary manifold 4 by means of bearings 10.

The stationary manifold 9 is provided with fluid passages, each of them comprising a radial hole 13 with an opening disposed on the external lateral surface of the stationary manifold 9 and provided with a connection element 14 for connection to a delivery pipe (not shown) of a fluid feeding circuit.

The number of radial holes 13 is equal to the number of radial holes 6 and each radial hole 13 is preferably longitudinally aligned to a corresponding radial hole 6, so that both the radial holes 6 and the radial holes 13 lie on the same plane perpendicular to the axis 3.

Preferably, the radial holes 13 are spaced out along the axis 3, as shown in Fig. 3.

Unlike the aforementioned rotary union 1 of the prior art, the rotary union 100 of the present invention also comprises an intermediate manifold 18 defined by a tube coaxial to the axis 3 and supported by the rotary manifold 4 by means of bearings 19.

With specific reference to Figs. 7 and 8, the intermediate manifold 18 is provided with fluid passages defined by through holes 20, each of them extending from an external lateral surface to an internal lateral surface of the intermediate manifold 18 and provided with an end opening that is aligned, in parallel direction to the axis 3, to a radial hole 13 of the stationary manifold 9 and with the other end opening that is aligned, in parallel direction to the axis 3, to a radial hole 6 of the rotary manifold 4.

Preferably, as shown in the example of Fig. 7, the through holes 20 are radial holes relative to the axis 3 and each of them lies on the same plane perpendicular to the axis 3 whereon the radial holes 6 and the radial holes 13 lie.

Moreover, for each through hole 20, the intermediate manifold 18 is provided with two annular recesses for fluid distribution in coaxial position to the axis 3 and comprising a first annular recess 21 obtained on the external lateral surface of the intermediate manifold 18, in a position facing the end opening of the through hole 20 and the radial hole 13 of the stationary manifold 9, and a second annular recess 22 obtained on the internal lateral surface of the intermediate manifold 18, in a position facing the end opening of the through hole 20 and the radial hole 6 of the rotary manifold 4.

In view of the above, regardless of the mutual angular position of the stationary manifold 9, of the intermediate manifold 18 and of the rotary manifold 4, each radial hole 13 of the stationary manifold 9 will always be in fluidic communication with a radial hole 6 of the rotary manifold 4, through the annular recess 21, the through hole 20 and the annular recess 22.

Each annular recess 21 is flanked by two annular recesses obtained on the external lateral surface of the intermediate manifold 18 and housing respective sealing members 23. Likewise, each annular recess 22 is flanked by two annular recesses obtained on the internal lateral surface of the intermediate manifold 18 and housing respective sealing members 24. Preferably, the annular sealing members 23 and 24 are made of elastomeric material.

Finally, the rotary union 100 comprises a gear train 25 configured in such a way to guide the rotation of the intermediate manifold 18 around the axis 3, relative to the stationary manifold 9 and the rotary manifold 4.

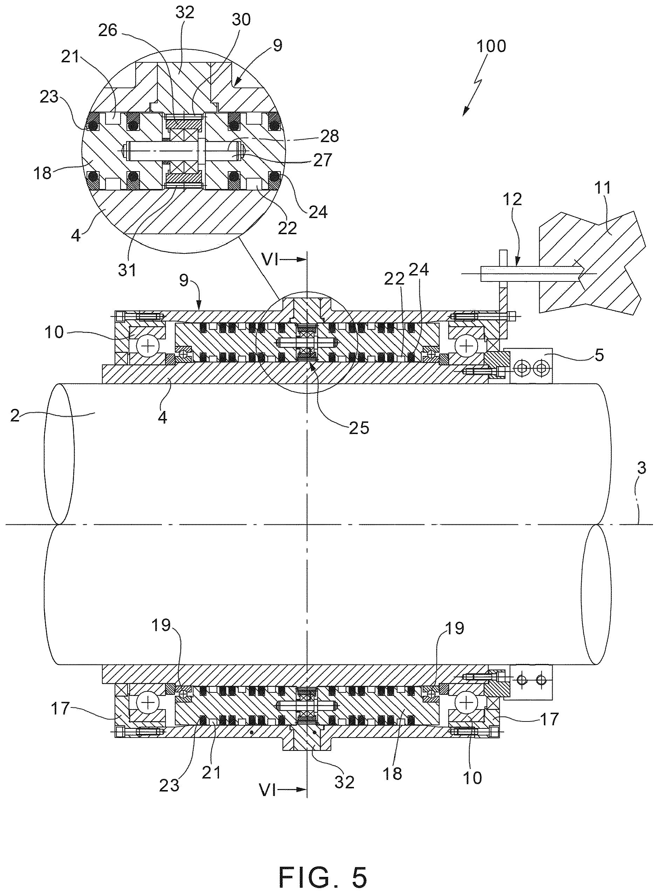

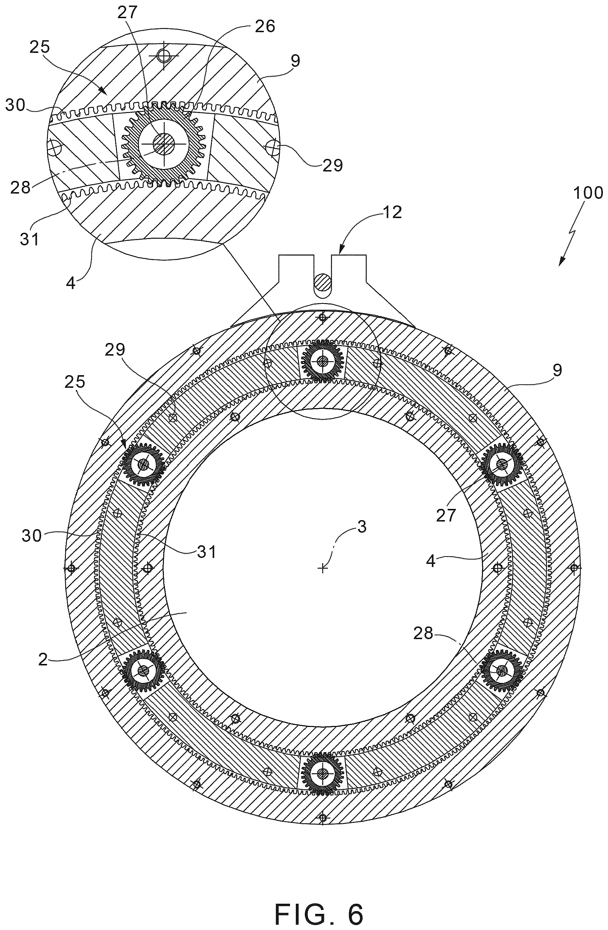

As shown in Figs. 5 and 6, the gear train 25 comprises a plurality of pinions 26, each of them being housed in a respective through radial recess of the intermediate manifold 18 and revolvingly mounted by means of a bearing on a pin 27 that is rigidly fixed to the rotary manifold 4 and provided with a longitudinal axis 28 parallel to the axis 3. Therefore each pinion 26 is free to rotate, relative to the pin 27, around the axis 28, but is axially constrained on the pin 27.

In the example of Fig. 6 six pinions are provided and angularly distributed around the axis 3. Nevertheless, according to different embodiments that are not shown herein, the number of pinions 6 can be higher or lower, according to the diameter and the rotational speed of the shaft 2.

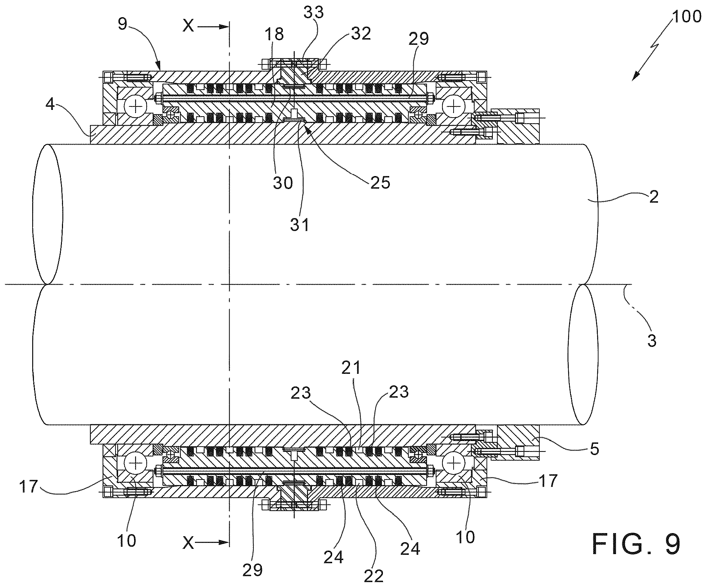

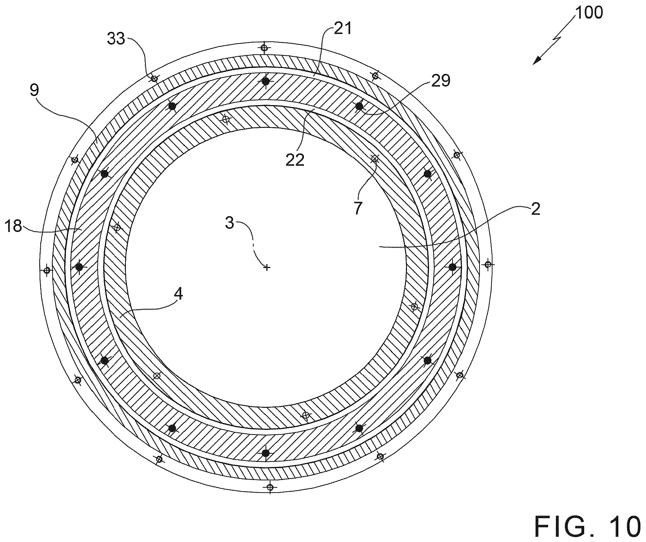

As shown in Figs. 9 and 10, in order to simplify the assembly of the pinions 26, the intermediate manifold 18 is preferably formed of two semi-tubes that are axially constrained by means of tie rods 29 parallel to the axis 3.

Moreover, the gear train 25 comprises two crown gears in coaxial position to the axis 3, which engage with the pinions 26.

In particular, as shown in Figs. 5 and 6, a first crown gear 30 is fixed to the stationary manifold 9 and develops completely inside the contact diameter of the sealing members 23, whereas a second crown gear 31 is fixed to the rotary manifold 4 and develops completely outside the contact diameter of the sealing members 24.

The crown gear 30 can be directly obtained on the internal surface of the stationary manifold 9 (not shown) or, as in the example, the crown gear 30 can be obtained in the internal surface of a collar 32 disposed between two semi-tubes that form the fixed manifold 9 and are axially constrained by means of threaded bars 33 (Fig. 9). The latter solution is preferred it simplifies the assembly operations of the rotary union 100.

As shown in the example, the crown gear 31 can be directly obtained on the external surface of the rotary manifold 4. Otherwise, according to another embodiment (not shown), the crown gear 31 can be obtained on the external surface of a collar that is coupled to the rotary manifold 4.

During operation, when the shaft 2 is driven into rotation around its axis 3, the coupling between the pinions 26 and the crown gears 30 and 31 determines the rotation of the pinions 26 around their axes 28 in the opposite direction relative to the shaft 2 and, simultaneously, the rotation of the pinions 26 and consequently of the intermediate manifold 18 around the axis 3 in the same direction as the shaft 2.

In view of the above, the structure of the gear train 25 is functionally similar to the one of a one-stage planetary arrangement, wherein the crown gear 31 fixed to the rotary manifold 4 is the sun gear, the crown gear 30 fixed to the stationary manifold 9 is the planet gear, the pinions 26 are the satellites that are simultaneously engaged with the sun and the planet, and finally the intermediate manifold 18 is the satellite-holder that constrains the axes 28 of the satellites to rotate around the main axis of the gear train, i.e. the axis 3.

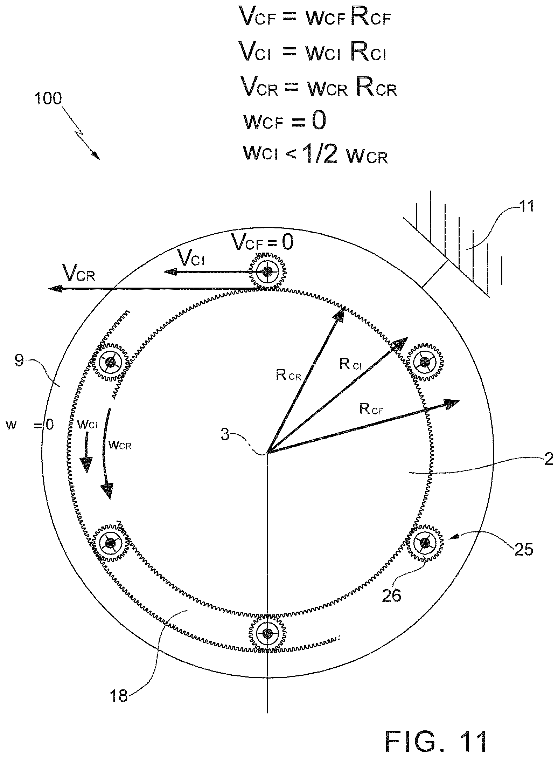

Consequently, given the known formulas of planetary gears, the intermediate manifold 18 rotates at a lower speed than the speed of the rotary manifold 4, practically at half of its speed, as diagrammatically shown in Fig. 11.

Therefore, in the same operating conditions, the rubbing speed perceived by the sealing elements 23 and 24 is lower, practically half, than the rubbing speed perceived by the sealing elements 16 of the rotary union 1 of the prior art.

Considering that, when a rotary union is used for transferring fluids to a shaft, the maximum rotational speed of the shaft is limited by the permitted rubbing speed of the seals, the rotary union of the present invention permits to achieve a maximum speed of the shaft that is almost double than the maximum speed permitted by a rotary union of the prior art.

Finally, it must be noted that, according to an embodiment that is not shown, the rotary union 100 of the present invention can be formed of two manifolds only, i.e. the stationary manifold 9 and the intermediate manifold 18.

Practically speaking, according to the latter embodiment, which is conceptualy and functionally identical to the aforementioned example shown in Figs. 3 to 11, the rotary manifold 4 is integral to the shaft 2 and, consequently, the stationary manifold 9 and the intermediate manifold 18 are directly mounted on the shaft 2 by means of the bearings 10 and, respectively, the bearings 19. Moreover, the radial holes 6 and the axial holes 7 are directly obtained in the shaft 2 and the crown gear 31 is defined by a collar that is coupled to the shaft 2.

## Claims

1. A rotary union (100) adapted to be used for transferring a fluid in a machine between
a fixed part and a rotary shaft (2); the rotary union (100) comprises:
- a rotary manifold (4) provided with at least a first fluid passage (6, 7); said rotary manifold being defined by the shaft (2) or being suitable for being coaxially mounted on the shaft (2) in angularly fixed position relative to the shaft (2);
- a stationary manifold (9) provided with at least a second fluid passage (13) and coaxially mounted on the rotary manifold (4) by means of bearings (10);
- fluid communication passages (21, 22) to establish a fluidic communication between the first fluid passage (6, 7) and the second fluid passage (13); and
- an intermediate manifold (18) arranged between the stationary manifold (9) and the rotary manifold (4), mounted coaxially on the rotary manifold (4) by means of bearings (19), and provided with at least one third fluid passage (20) fluidically communicating with the first fluid passage (6, 7) and the second fluid passage (13) through said fluid communication passages (21, 22);
rotary union (100) **characterized in that** it comprises:
a gear train (25) arranged between the stationary manifold (9) and the rotary manifold (4) in such a way to cause the rotation of the intermediate manifold (18) at a speed lower than the speed of the rotary manifold (4) during operation.

2. The rotary union (100) according to claim 1, wherein the gear train (25) is an epicyclic gear train.

3. The rotary union (100) according to claim 2, wherein the gear train (25) comprises a first crown gear (31) coaxial to and angularly fixed to the rotary manifold (4), a second crown gear (30) coaxial to and angularly fixed to the stationary manifold (9), and a number of pinions (26) mounted on the intermediate manifold (18) and simultaneously engaging with both the first and the second crown gears (31, 30).

4. The rotary union (100) according to claim 2 or 3, wherein the rotary manifold (4) has radial through recesses, uniformly distributed around a rotation axis (3) of the rotary manifold (4); each pinion (26) is arranged in a respective said radial recess and is mounted in a rotating manner, by means of a bearing, on a pin (27) parallel to the rotation axis (3) of the rotary manifold (4) and angularly and axially fixed to the rotary manifold (4).

5. The rotary union (100) according to any one of the preceding claims, wherein said fluid communication passages (21, 22) comprise, for each third fluid passage (20), a first annular recess (22) formed in, and coaxial to, the intermediate manifold (18) in a position facing an open end of the third fluid passage (20) and facing an open end of said first fluid passage (6, 7); and a second annular recess (21) formed in, and coaxial to, the intermediate manifold (18) in a position facing the other open end of the third fluid passage (20) and facing an open end of the second fluid passage (13).

6. The rotary union (100) according to any one of the preceding claims, comprising sealing members (23, 24) to prevent fluid leakage between the intermediate manifold (18) and the stationary manifold (9) and between the rotary manifold (4) and the intermediate manifold (18).

7. The rotary union (100) according to claim 2, wherein the rotary manifold (4) is defined by the shaft (2) and the first crown gear (31) is formed in a circumferential portion of the shaft (2) or in a collar mounted coaxially on the shaft (2), in an angularly fixed position with respect to the shaft (2).

## Patentansprüche

1. Drehverbindung (100), die dazu geeignet ist, zur Fluidübertragung in einer Maschine zwischen einem festen Teil und einer Drehwelle (2) verwendet zu werden; wobei die Drehverbindung (100) umfasst:
- einen Drehverteiler (4), der mit mindestens einem ersten Fluiddurchgang (6, 7) versehen ist, wobei der Drehverteiler durch die Welle (2) definiert ist oder dazu geeignet ist, koaxial auf der Welle (2) in einer in Bezug auf die Welle (2) festwinkligen Position montiert zu werden;
- einen stationären Verteiler (9), der mit mindestens einem zweiten Fluiddurchgang (13) versehen ist und koaxial auf dem Drehverteiler (4) mittels Lagern (10) montiert ist;
- Fluidverbindungsdurchgänge (21, 22), um den ersten Fluiddurchgang (6, 7) und den zweiten Fluiddurchgang (13) in fluidische Verbindung zu setzen; und
- einen Zwischenverteiler (18), der zwischen dem stationären Verteiler (9) und dem Drehverteiler (4) angeordnet ist, koaxial auf dem Drehverteiler (4) mittels Lagern (19) montiert ist und mit mindestens einem dritten Fluiddurchgang (20) versehen ist, der in fluidischer Verbindung mit dem ersten Fluiddurchgang (6, 7) und dem zweiten Fluiddurchgang (13) durch die Fluidverbindungsdurchgänge (21, 22) steht;
wobei die Drehverbindung (100) **dadurch gekennzeichnet ist, dass** sie umfasst:
einen Getriebezug (25), der zwischen dem stationären Verteiler (9) und dem Drehverteiler (4) angeordnet ist, derart, dass der Zwischenverteiler (18) sich während des Betriebs mit geringerer Geschwindigkeit als der Drehverteiler (4) dreht.

2. Drehverbindung (100) nach Anspruch 1, wobei der Getriebezug (25) ein Umlaufgetriebezug ist.

3. Drehverbindung (100) nach Anspruch 2, wobei der Getriebezug (25) einen ersten Zahnkranz (31), der koaxial und winkelfest mit dem Drehverteiler (4) ist, einen zweiten Zahnkranz (30) der koaxial und winkelfest mit dem stationären Verteiler (9) ist, und eine Anzahl von Ritzeln (26) umfasst, die auf dem Zwischenverteiler (18) montiert sind und gleichzeitig mit dem ersten und dem zweiten Zahnkranz (31, 30) in Eingriff stehen.

4. Drehverbindung (100) nach Anspruch 2 oder 3, wobei der Drehverteiler (4) radiale Durchgangsausnehmungen aufweist, die gleichmäßig um eine Drehachse (3) des Drehverteilers (4) verteilt sind; wobei jedes Ritzel (26) in einer jeweiligen radialen Ausnehmung angeordnet und mittels eines Lagers auf einem Stift (27) drehbar montiert ist, der parallel zur Drehachse (3) des Drehverteilers (4) und winkelfest und achsfest mit dem Drehverteiler (4) ist.

5. Drehverbindung (100) nach einem der vorstehenden Ansprüche, wobei die Fluidverbindungsdurchgänge (21, 22) für jeden dritten Fluiddurchgang (20) eine erste ringförmige Ausnehmung (22) umfassen, die koaxial zu dem Zwischenverteiler (18) in einer einem offenen Ende des dritten Fluiddurchgangs (20) und einem offenen Ende des ersten Fluiddurchgangs (6, 7) zugewandten Position herausgearbeitet ist; und eine zweite ringförmige Ausnehmung (21), die koaxial zu dem Zwischenverteiler (18) in einer dem anderen offenen Ende des dritten Fluiddurchgangs (20) und einem offenen Ende des zweiten Fluiddurchgangs (13) zugewandten Position herausgearbeitet ist.

6. Drehverbindung (100) nach einem der vorstehenden Ansprüche, umfassend Dichtungselemente (23, 24) zur Verhinderung von Fluidleckagen zwischen dem Zwischenverteiler (18) und dem stationären Verteiler (9) und zwischen dem Drehverteiler (4) und dem Zwischenverteiler (18).

7. Drehverbindung (100) nach Anspruch 2, wobei der Drehverteiler (4) durch die Welle (2) definiert ist und der erste Zahnkranz (31) auf einem peripheren Abschnitt der Welle (2) oder auf einem Bund herausgearbeitet ist, der koaxial auf der Welle (2) in einer in Bezug auf die Welle (2) festwinkligen Position montiert ist.

## Revendications

1. Joint rotatif (100) apte à être utilisé pour transférer des fluides dans une machine entre une partie fixe et un arbre (2) rotatif ; le joint rotatif (100) comprenant :
- un collecteur rotatif (4), qui est muni d'au moins un premier passage pour un fluide (6, 7) ; le collecteur rotatif étant défini par l'arbre (2) ou étant apte à être monté de manière coaxiale sur l'arbre (2) en position angulairement fixe par rapport à l'arbre (2) ;
- un collecteur statique (9), qui est muni d'au moins un deuxième passage pour un fluide (13) et qui est monté de manière coaxiale sur le collecteur rotatif (4) moyennant des roulements (10) ;
- des passages de communication du fluide (21, 22) pour mettre en communication fluidique le premier passage pour un fluide (6, 7) et le deuxième passage pour un fluide (13) ; et
- un collecteur intermédiaire (18), interposé entre le collecteur statique (9) et le collecteur rotatif (4), qui est monté de manière coaxiale sur le collecteur rotatif (4) moyennant des roulements (19), et qui est muni d'au moins un troisième passage pour un fluide (20) qui communique de manière fluidique avec le premier passage pour un fluide (6, 7) et le deuxième passage pour un fluide (13) à travers lesdits passages de communication du fluide (21, 22) ;
le joint rotatif (100) est **caractérisé en ce qu'**il comprend :
une transmission (25) disposée entre le collecteur statique (9) et le collecteur rotatif (4) de sorte que, lors du fonctionnement, le collecteur intermédiaire (18) puisse tourner à une vitesse inférieure par rapport à la vitesse du collecteur rotatif (4).

2. Joint rotatif (100) selon la revendication 1, où la transmission (25) est du type épicycloïdal.

3. Joint rotatif (100) selon la revendication 2, où la transmission (25) comprend une première couronne dentée (31) coaxiale et angulairement solidaire au collecteur rotatif (4), une seconde couronne dentée (30) coaxiale et angulairement solidaire au collecteur statique (9), et un certain nombre de pignons (26) montés sur le collecteur intermédiaire (18) et qui s'engagent simultanément avec la première et la seconde couronne dentée (31, 30).

4. Joint rotatif (100) selon la revendication 2 ou 3, où le collecteur rotatif (4) présente des cavités radiales passantes, uniformément distribuées autour d'un axe de rotation (3) du collecteur rotatif (4) ; chaque pignon (26) est disposé dans une cavité radiale correspondante et il est monté pivotant, moyennant un palier, sur un pivot (27) parallèle à l'axe de rotation (3) du collecteur rotatif (4) et angulairement et axialement solidaire au collecteur rotatif (4).

5. Joint rotatif (100) selon l'une quelconque des revendications précédentes, où lesdits passages de communication du fluide (21, 22) comprennent, pour chaque troisième passage pour un fluide (20), une première cavité annulaire (22) réalisée de manière coaxiale sur le collecteur intermédiaire (18) en position orientée vers une extrémité ouverte du troisième passage pour un fluide (20) et vers une extrémité ouverte du dit premier passage pour un fluide (6, 7) ; et une seconde cavité annulaire (21) réalisée de manière coaxiale sur le collecteur intermédiaire (18) en position orientée vers l'autre extrémité ouverte du troisième passage pour un fluide (20) et vers une extrémité ouverte du deuxième passage pour un fluide (13).

6. Joint rotatif (100) selon l'une quelconque des revendications précédentes, comprenant des organes d'étanchéité (23, 24) pour empêcher des fuites de fluide entre le collecteur intermédiaire (18) et le collecteur statique (9) et entre le collecteur rotatif (4) et le collecteur intermédiaire (18).

7. Joint rotatif (100) selon la revendication 2, où le collecteur rotatif (4) est défini par l'arbre (2) et la première couronne dentée (31) est réalisée sur une portion de circonférence de l'arbre (2) ou sur un collier installé de manière coaxiale sur l'arbre (2) en position angulairement fixe par rapport à l'arbre (2).
